# EUROPEAN PATENT APPLICATION

(11) **EP 3 660 360 A1**
(43) Date of publication of application: **03.06.2020**
(21) Application number: 18838806.0
(22) Date of filing: 23.07.2018
(51) Int. Cl.: F16J 15/3232, F01L 3/08

(54) **VALVE STEM SEAL**

(30) Priority: 24.07.2017 JP 2017142827
(71) Applicant: NOK Corporation, Tokyo 105-8585 (JP)
(72) Inventor: ONODERA Hiroshi, Fukushima-shi Fukushima 960-1193 (JP); NISHIMURA Nobuhiro, Fukushima-shi Fukushima 960-1193 (JP)
(74) Representative: Weickmann & Weickmann PartmbB
(86) International application number: PCT/JP2018/027576
(87) International publication number: WO 2019/022032

(57) **Abstract**

Provided is a valve stem seal capable of improving durability against back pressure. An elastic body part (20) of a valve stem seal (1) includes a seal lip (23) in an annular shape that abuts on a valve stem, and a back pressure lip (24) in an annular shape arranged on the cylinder side in an axis (X) direction to be spaced apart from the seal lip (23). A flange portion (12) in an annular shape extending toward the axis (X) is formed at an end portion of a reinforcement ring (10) on the cam side, and the flange portion (12) is positioned between the seal lip (23) and the back pressure lip (24) of the elastic body part (20) in the axis (X) direction. An interval (L2) in the axis (X) direction between an inner-periphery end portion (13) of the flange portion (12) and a root portion (24a) of the back pressure lip (24) in the elastic body part (20) is larger than an interval (LI) in the axis (X) direction between the root portion (24a) of the back pressure lip (24) and a tip end portion (24b) of the back pressure lip (24), and the outline of a cylinder-side corner portion (13d) of the inner-periphery end portion (13) of the flange portion (12) on the cylinder side is a curved line in a cross section.

## Description

### Technical Field

The present invention relates to a valve stem seal, and particularly relates to a valve stem seal to be used for a valve of an internal combustion engine of an automobile.

### Background Art

Conventionally, a valve stem seal is used to seal a space between a valve stem and a valve guide of a valve that reciprocates between the cam side and the cylinder side in an internal combustion engine. The valve stem seal supplies lubricating oil between the valve guide and the valve stem to facilitate sliding of the valve stem smoothly, and controls the supply amount of the lubricating oil to prevent the lubricating oil from flowing into a port and a cylinder and to prevent troubles such as generation of white smoke.

In the valve stem seal, a seal lip contacts the valve stem and controls the supply amount of the lubricating oil as described above, and a back pressure lip receives pressure (hereinafter referred to as the back pressure) from the cylinder side based on an exhaust gas, reduces the back pressure to be applied to the seal lip and inhibits deformation of the seal lip due to the back pressure so as to stabilize the supply amount of the lubricating oil by the seal lip (for example, see Patent Literature 1).

### Document List

### Patent Literature

Patent Literature 1: Japanese Patent Application Laid-Open No. 2003-42301

### Summary of Invention

### Technical Problem

As described above, in the conventional valve stem seal, the back pressure lip is provided to inhibit the back pressure from being applied to the seal lip. However, in recent years, with demands for further reduction in consumption of fuel by internal combustion engines, there is a tendency of an increase in the exhaust gas pressure due to downsizing of engines and mounting of turbochargers, etc., and therefore the back pressure tends to be higher, and the back pressure lip repeatedly receives higher back pressure. When the back pressure lip receives high back pressure repetitively, high stress is repetitively generated particularly at the root of the back pressure lip, and there is a concern that cracks may appear at the root of the back pressure lip.

Thus, the conventional valve stem seal has been required to have a structure capable of improving durability against the back pressure.

In view of the above-mentioned problem, it is an object of the present invention to provide a valve stem seal capable of improving the durability against the back pressure.

### Solution to Problem

In order to achieve the above object, a valve stem seal according to the present invention is characterized by including: a reinforcement ring in an annular shape around an axis; and an elastic body part in an annular shape around the axis, the elastic body part being formed of an elastic body to be attached to the reinforcement ring, wherein the elastic body part has a seal lip in an annular shape that abuts on a valve stem, and a back pressure lip in an annular shape to be arranged on another side in the axis direction to be spaced apart from the seal lip, a flange portion in an annular shape extending in a direction toward the axis is formed at an end portion of the reinforcement ring on one side in the axis direction, the flange portion is positioned between the seal lip and the back pressure lip of the elastic body part in the axis direction, an interval in the axis direction between an end portion on an inner periphery side of the flange portion and a root of the back pressure lip in the elastic body part is larger than an interval in the axis direction between the root of the back pressure lip and a tip end of the back pressure lip, and an outline of a corner portion of the end portion on the inner periphery side of the flange portion on the other side in the axis direction is a curved line in a cross section along the axis.

In the valve stem seal according to one aspect of the present invention, the flange portion extends toward the axis obliquely to the one side in the axis direction.

In the valve stem seal according to one aspect of the present invention, an end on an inner periphery side of the flange portion is positioned on the inner periphery side relative to the root of the back pressure lip.

In the valve stem seal according to one aspect of the present invention, the back pressure lip extends toward the axis obliquely to the other side in the axis direction.

### Effects of Invention

According to the valve stem seal of the present invention, it is possible to improve durability against the back pressure.

### Brief Description of Drawings

[Fig. 1] A cross-sectional view along an axis to show a schematic structure of a valve stem seal according to an embodiment of the present invention.
[Fig. 2] A partially enlarged cross-sectional view showing, in an enlarged manner, the vicinity of a back pressure lip and a flange portion of the valve stem seal shown in Fig. 1.
[Fig. 3] A diagram showing a schematic configuration of a test device used for a durability performance test of the valve stem seal according to the embodiment of the present invention.

### Description of Embodiment

Hereinafter, an embodiment of the present invention will be described with reference to the drawings.

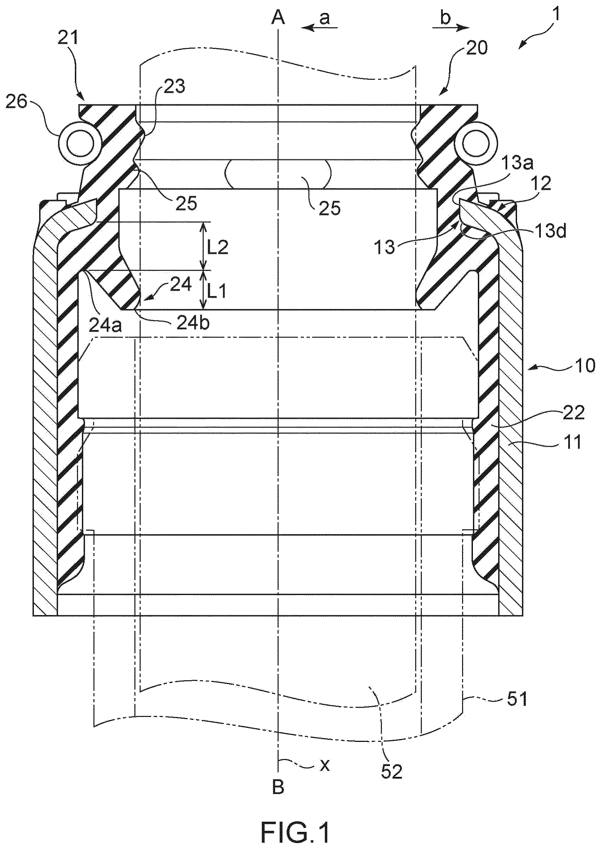

Fig. 1 is a cross-sectional view of a cross section along an axis X to show a schematic structure of a valve stem seal 1 according to the embodiment of the present invention. The valve stem seal 1 according to the embodiment of the present invention is used for a valve train of an internal combustion engine of an automobile to seal a space between a valve guide and a valve stem of a valve for communication and disconnection between a cylinder and a port, the valve guide facing the cam side at one end through which the valve stem is to be inserted and facing the cylinder side at another end. Hereinafter, for convenience of explanation, one side in the axis X direction (the side indicated with sign A in the drawing) is defined as the cam side, and another side in the axis X direction (the side indicated with sign B in the drawing) is defined as the cylinder side. Further, in a direction orthogonal to the axis X (hereinafter, also referred to as the radial direction), a side in a direction toward the axis X is defined as the inner periphery side (the side in the direction of arrow a in Fig. 1), and a side in a direction away from the axis X is defined as the outer periphery side (the side in the direction of arrow b in Fig. 1).

As shown in Fig. 1, the valve stem seal 1 according to the present embodiment includes a reinforcement ring 10 in an annular shape around the axis X, and an elastic body part 20 in an annular shape around the axis X, the elastic body part 20 being formed of an elastic body to be attached to the reinforcement ring 10. The elastic body part 20 has a seal lip 23 in an annular shape that abuts on a valve stem, and a back pressure lip 24 in an annular shape arranged on another side (cylinder side B) in the axis X direction to be spaced apart from the seal lip 23. A flange portion 12 in an annular shape extending in a direction toward the axis X is formed at an end portion of the reinforcement ring 10 on one side (cam side A) in the axis X direction, and the flange portion 12 is positioned between the seal lip 23 and the back pressure lip 24 of the elastic body part 20 in the axis X direction.

An interval (base portion length L2) in the axis X direction between an end portion (inner-periphery end portion 13) on the inner periphery side of the flange portion 12 and a root (root portion 24a) of the back pressure lip 24 in the elastic body part 20 is larger than an interval (back pressure lip length L1) in the axis X direction between the root portion 24a of the back pressure lip 24 and a tip end (tip end portion 24b) of the back pressure lip 24 (L1 < L2). The outline of a corner portion (cylinder-side corner portion 13d) of the inner-periphery end portion 13 of the flange portion 12 on the other side (cylinder side B) in the axis X direction is a curved line in a cross section along the axis X.

In a usage state, the valve stem seal 1 is fitted to an end portion of a valve guide 51 on the cam side (A side), and a valve stem 52 is inserted through the valve stem seal 1 and the valve guide 51. The valve stem seal 1 controls the supply amount of lubricating oil from the cam side to between the valve guide 51 and the valve stem 52, and seals a gap between the valve guide 51 and the valve stem 52 between the cam side and the cylinder side (B side).

Hereinafter, the configuration of the valve stem seal 1 will be specifically described.

The elastic body of the elastic body part 20 is, for example, a rubber material such as fluorine rubber and acrylic rubber. The reinforcement ring 10 is, for example, made of metal and manufactured by press working or forging, and the elastic body part 20 is formed by cross-linking (vulcanization) molding using a mold. In the cross-linking molding, the reinforcement ring 10 is placed in the mold, the elastic body part 20 is bonded to the reinforcement ring 10 by cross-linking adhesion, and thus the elastic body part 20 is molded integrally with the reinforcement ring 10.

As shown in Fig. 1, the reinforcement ring 10 has a substantially L-shaped cross section in the shape of the cross section along the axis X (hereinafter also referred to as the cross section shape), and includes a cylindrical portion 11 that is a cylindrical or substantially cylindrical portion extending in the axis X direction in addition to the above-described flange portion 12. The flange portion 12 is a portion in a hollow annular shape extending from a cam-side end portion of the cylindrical portion 11 toward the inner periphery side, and extends toward the axis X obliquely to one side (the cam side) in the axis X direction.

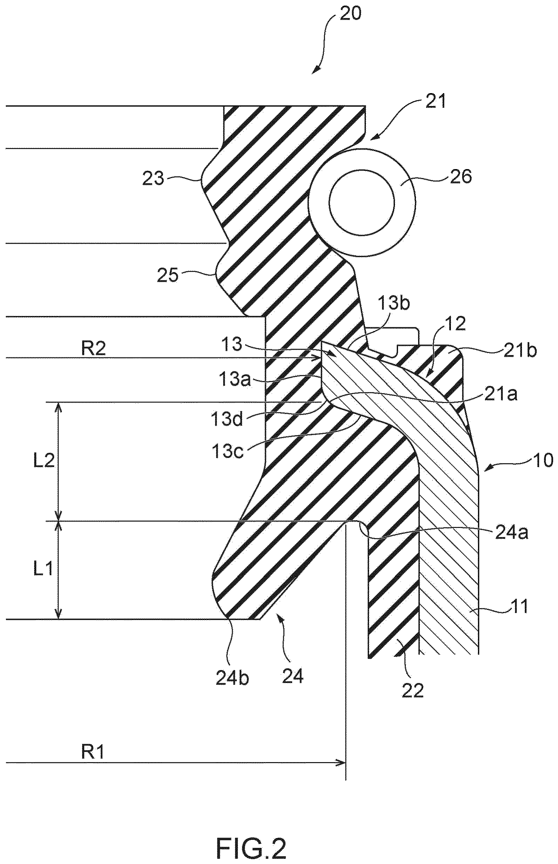

As shown in the enlarged view of the inner-periphery end portion 13 of the flange portion 12 in Fig. 2, the flange portion 12 has an inner-periphery end 13a that is a tubular or cylindrical surface facing the inner periphery side, a cam-side surface 13b that is a surface in an annular shape connected to the inner-periphery end 13a on the cam side, and a cylinder-side surface 13c that is a surface in an annular shape connected to the inner-periphery end 13a on the cylinder side. Each of the cam-side surface 13b and the cylinder-side surface 13c is, for example, a tapered surface or a truncated cone surface. The inner-periphery end 13a and the cylinder-side surface 13c are connected through the above-described cylinder-side corner portion 13d as an annular curved surface, and the cylinder-side end portion of the inner-periphery end portion 13 of the flange portion 12 is a smooth curved surface. The inner-periphery end portion 13 of the flange portion 12 is a portion including the cylinder-side corner portion 13d and a portion of the cam-side surface 13b facing opposite to the cylinder-side corner portion 13d in the axis X direction, or a portion including the cylinder-side corner portion 13d, the cam-side surface 13b and a portion of the cylinder-side surface 13c on the cylinder-side corner portion 13d side.

The elastic body part 20 integrally includes a seal portion 21 and a fitting portion 22. The seal portion 21 is a portion in an annular shape that extends in the axis X direction, and includes the seal lip 23 that abuts on the valve stem 52 which is inserted in the usage state, the back pressure lip 24 in an annular shape arranged on the cylinder side in the axis X direction to be spaced apart from the seal lip 23, and a projection 25 in an annular shape arranged between the seal lip 23 and the back pressure lip 24 in the axis X direction.

Specifically, as shown in Fig. 1, the seal lip 23 is a portion in an annular shape around the axis X, which is formed at an end portion, or the vicinity of an end portion, of the seal portion 21 on the cam side and protrudes toward the inner periphery side. The seal lip 23 has a wedge-shaped cross section protruding toward the inner periphery side.

As shown in Figs. 1 and 2, the back pressure lip 24 is a lip in an annular shape formed at an end portion of the seal portion 21 on the cylinder side and extending toward the cylinder side. More specifically, the back pressure lip 24 is a lip in the form of a conical tube with the axis X as the center or substantially the center and extending toward the axis X obliquely to the cylinder side. The back pressure lip 24 abuts on the valve stem 52 in the usage state.

The projection 25 is a portion that extends in an arc shape protruding toward the inner periphery side on the cylinder side relative to the seal lip 23, and the seal portion 21 is provided with a plurality of projections 25 arranged at equal angular intervals around the axis X. In the seal portion 21, for example, four projections 25 are formed. The projection 25 is a portion for improving the followability of the seal lip 23 with respect to the valve stem 52, and a portion for causing the seal lip 23 to follow the valve stem 52 in response to a change of the position of the valve stem 52 in the usage state.

In the elastic body part 20, the fitting portion 22 is a portion that functions to allow the valve stem seal 1 to be fitted and fixed to the valve guide 51, and covers the cylindrical portion 11 of the reinforcement ring 10 from the inner side. The fitting portion 22 extends from the root portion 24a on the outer periphery side of the back pressure lip 24 to the cylinder side. When the cam-side end portion of the valve guide 51 is press-fitted into the inner side of the fitting portion 22, as shown in Fig. 1, the fitting portion 22 is compressed between the cylindrical portion 11 of the reinforcement ring 10 and an outer peripheral surface of the valve guide 51, and produces a fitting force of predetermined magnitude as a radial force. With the fitting force, the valve stem seal 1 is fitted and fixed to the valve guide 51. The thickness of the fitting portion 22 in the radial direction is set to a predetermined thickness so that the predetermined fitting force is generated. The peripheral surface of the fitting portion 22 may be set to the predetermined thickness in a partial range in the axis X direction, or the peripheral surface of the fitting portion 22 may be set to the predetermined thickness in the entire range in the axis X direction.

Moreover, the valve stem seal 1 has a garter spring 26, and the garter spring 26 is fitted on the outer periphery side of the seal portion 21 to face a direction opposite to the seal lip 23. The garter spring 26 pushes the seal lip 23 in a direction toward the axis X, and applies tension toward the inner periphery side to the seal lip 23 so that the seal lip 23 follows a change of the position of the valve stem 52.

As shown in Fig. 1, in the seal portion 21, the flange portion 12 of the reinforcement ring 10 is positioned between the seal lip 23 and the back pressure lip 24, and at a position apart from the root portion 24a of the back pressure lip 24 to the cam side. Specifically, in the seal portion 21, as shown in an enlarged manner in Fig. 2, the interval (base portion length L2) in the axis X direction between the inner-periphery end portion 13 of the flange portion 12 and the root portion 24a of the back pressure lip 24 is larger than the interval (back pressure lip length L1) in the axis X direction between the root portion 24a of the back pressure lip 24 and the tip end portion 24b of the back pressure lip 24 (L2 > L1). The elastic body part 20 is formed integrally with the reinforcement ring 10, and the seal portion 21 adheres to or contacts the flange portion 12. Therefore, the base portion length L2 is also the length of the elastic body part 20 in the axis X direction between a portion of the elastic body part 20 in contact with the inner-periphery end portion 13 of the flange portion 12 and the root portion 24a of the back pressure lip 24. The base point of the base portion length L2 on the inner-periphery end portion 13 side of the flange portion 12 is for example, the intersection of an extended line of the inner-periphery end 13a and an extended line of the cylinder-side surface 13c, a point on the cylinder-side corner portion 13d, a connection point between the cylinder-side surface 13c and the cylinder-side corner portion 13d, and a connection point between the inner-periphery end 13a and the cylinder-side corner portion 13d. The base point of the base portion length L2 on the inner-periphery end portion 13 side of the flange portion 12 may also be another point.

As shown in Fig. 2, the inner-periphery end 13a of the flange portion 12 is positioned on the inner periphery side relative to the root portion 24a of the back pressure lip 24. That is, the length from the axis X to the inner-periphery end 13a of the flange portion 12 (flange-portion inner radius R2) is shorter than the length from the axis X to the root portion 24a of the back pressure lip 24 (back-pressure-lip root radius R1) (R2 < R1). Similarly to the above-described base portion length L2, the flange-portion inner radius R2 is also the length of the elastic body part 20 between the portion of the elastic body part 20 in contact with the inner-periphery end 13a of the flange portion 12 and the axis X.

The valve stem seal 1 has the above-described configuration, and consequently the back pressure lip 24 has high durability against repetitive back pressure in the usage state. Specifically, the base portion length L2 of the elastic body part 20 is longer than the back pressure lip length L1, and therefore it is possible to enhance the strength of the portion of the elastic body part 20 connected to the root portion 24a of the back pressure lip 24 against deformation of the back pressure lip 24. Since the base portion length L2 of the elastic body part 20 is longer, it is possible to prevent high stress generated by deformation of the back pressure lip 24 from continuing from the root portion 24a of the back pressure lip 24 to the flange portion 12 and to prevent rupture from occurring from the root portion 24a of the back pressure lip 24.

Moreover, the cylinder-side corner portion 13d of the flange portion 12 is a curved surface, and a portion of the elastic body part 20 (flange-corner-portion-corresponding portion 21a) in contact with the cylinder-side corner portion 13d is also a curved surface. Therefore, it is possible to disperse stress which is caused at the flange-corner-portion-corresponding portion 21a of the seal portion 21 by deformation of the back pressure lip 24, and concentration of stress can be prevented. Thus, it is possible to prevent the deformation of the back pressure lip 24 from causing damage such as cracks in the flange-corner-portion-corresponding portion 21a of the seal portion 21.

Further, the inner-periphery end 13a of the flange portion 12 is positioned on the inner periphery side relative to the root portion 24a of the back pressure lip 24, and the flange-portion inner radius R2 is smaller than the back-pressure-lip root radius R1. Thus, the flange portion 12 is positioned to cover the root portion 24a of the back pressure lip 24 from the cam side in the axis X direction. Consequently, the force transmission path between the root portion 24a of the back pressure lip 24 and a shoulder portion 21b that is a portion of the seal portion 21 on the outer periphery side is disconnected, and stress does not continue between the root portion 24a of the back pressure lip 24 and the shoulder portion 21b of the seal portion 21, thereby preventing rupture of the back pressure lip 24.

In addition, the flange portion 12 extends obliquely from the cylindrical portion 11 to the cam side, the area between the flange portion 12 and the back pressure lip 24 can be increased, and the strength of the seal portion 21 against deformation of the back pressure lip 24 can be enhanced.

Thus, according to the valve stem seal 1 of the embodiment of the present invention, it is possible to enhance the strength against the deformation of the back pressure lip 24 and improve the durability against the back pressure.

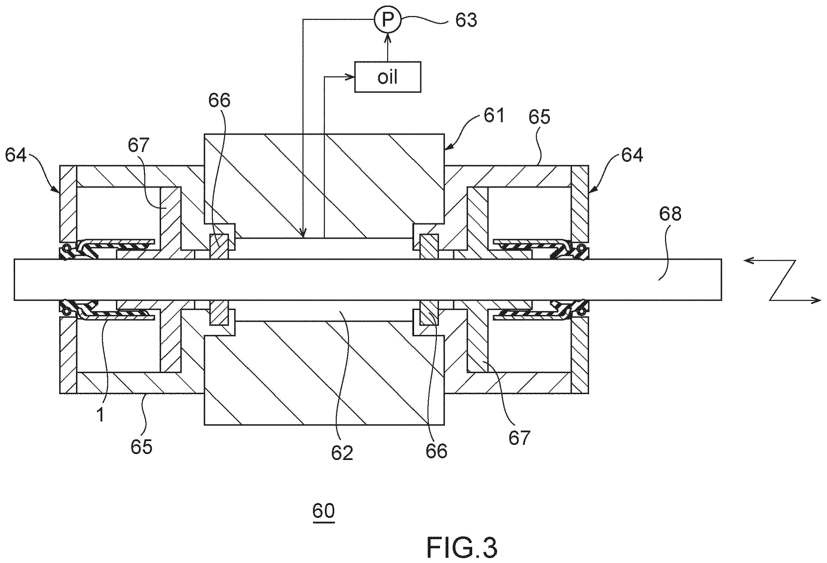

Next, a durability performance test of the valve stem seal 1 according to the embodiment of the present invention will be described. The present inventor manufactured the valve stem seal 1 according to the above-described embodiment of the present invention (Test Example 1), and performed a durability performance test on the valve stem seal 1. For this evaluation test, a test device 60 shown in Fig. 3 was used.

As shown in Fig. 3, the test device 60 has a symmetrical structure, and a pair of holder portions 64 are symmetrically formed with respect to a base body 61 that forms an oil chamber 62, which is configured to be capable of adjusting the internal hydraulic pressure by a pump 63. Each of the holder portions 64 includes a housing 65, a bush 66 fixed to the housing 65, and a dummy guide 67. The housing 65 is attached to the base body 61, and the inside of the housing 65 communicates with the oil chamber 62 of the base body 61. A shaft 68 is inserted into the bush 66 and the dummy guide 67 so that the shaft 68 can reciprocate in the extending direction of the shaft, and the dummy guide 67 allows the valve stem seal 1 to be attached in the same manner as in the usage state. The housing 65 is configured to push the valve stem seal 1 from the cam side so that the valve stem seal 1 attached to the dummy guide 67 does not come off. Oil pressurized by the pump 63 enters into the valve stem seal 1 attached to the dummy guide 67 via the space between the bush 66 and dummy guide 67 and the shaft 68, and presses the back pressure lip 24. The hydraulic pressure in the oil chamber 62 and the hydraulic pressure to be applied to the back pressure lip 24 can be kept constant by the pump 63. The shaft 68 has the same diameter as the valve stem to which the valve stem seal 1 is applied.

The durability performance test was performed by attaching Test Example 1 to one of the dummy guides 67 of the above-described test device 60, attaching a dummy seal for retaining the hydraulic pressure to the other dummy guide 67 and reciprocating the shaft 68. The hydraulic pressure to be applied to the back pressure lip 24 was periodically changed between 1.5 MPA and 0. The ambient temperature of Test Example 1 was constant at 125 °C. As the shaft 68 was moved to the dummy seal side, simultaneously the hydraulic pressure to be applied to the back pressure lip 24 of Test Example 1 was set at 1.5 MPA, and as the shaft 68 was moved to the Test Example 1 side, simultaneously the hydraulic pressure to be applied to the back pressure lip 24 of Test Example 1 was returned to zero. In this manner, the usage state in a 4-cycle engine was realized by the test device 60, and the durability of Test Example 1 was evaluated. Further, for a conventional valve stem seal (Comparative Example 1), a durability performance test was also performed in the same manner using the test device 60.

Regarding Test Example 1, no damage was caused even when the shaft 68 was reciprocated 2,000,000 times. On the other hand, for Comparative Example 1, when Comparative Example 1 was observed after reciprocating the shaft 68 42,000 times, damage extending from the root of the back pressure lip to the cam side was confirmed. Thus, it was also found from the durability performance tests that the valve stem seal 1 according to the embodiment of the present invention can improve durability.

The preferred embodiment of the present invention has been described above, but the present invention is not limited to the valve stem seal 1 according to the above-described embodiment, and includes all aspects included within the concept and the scope of the claims of the present invention. Each of structures may be appropriately combined to solve or provide at least part of the above-described problems or effects. For example, the shape, material, arrangement, size, etc. of each of components in the above embodiment can be appropriately changed according to a specific usage state of the present invention.

### List of Reference Signs

- 1: valve stem seal,
- 10: reinforcement ring,
- 11: cylindrical portion,
- 12: flange portion,
- 13: inner-periphery end portion,
- 13a: inner-periphery end,
- 13b: cam-side surface,
- 13c: cylinder-side surface,
- 13d: cylinder-side corner portion,
- 20: elastic body part,
- 21: seal portion,
- 21a: flange-corner-portion-corresponding portion,
- 21b: shoulder portion,
- 22: fitting portion,
- 23: seal lip,
- 24: back pressure lip,
- 24a: root portion,
- 24b: tip end portion,
- 25: projection,
- 26: garter spring,
- 51: valve guide,
- 52: valve stem,
- 60: test device,
- 61: base body,
- 62: oil chamber,
- 63: pump,
- 64: holder portion,
- 65: housing,
- 66: bush,
- 67: dummy guide,
- 68: shaft,
- L1: back pressure lip length,
- L2: base portion length,
- R1: back-pressure-lip root radius,
- R2: flange-portion inner radius, and
- X: axis.

## Claims

1. A valve stem seal **characterized by** comprising:
a reinforcement ring in an annular shape around an axis; and
an elastic body part in an annular shape around the axis, the elastic body part being formed of an elastic body to be attached to the reinforcement ring, wherein
the elastic body part has a seal lip in an annular shape that abuts on a valve stem, and a back pressure lip in an annular shape arranged on another side in the axis direction to be spaced apart from the seal lip,
a flange portion in an annular shape extending in a direction toward the axis is formed at an end portion of the reinforcement ring on one side in the axis direction,
the flange portion is positioned between the seal lip and the back pressure lip of the elastic body part in the axis direction,
an interval in the axis direction between an end portion on an inner periphery side of the flange portion and a root of the back pressure lip in the elastic body part is larger than an interval in the axis direction between the root of the back pressure lip and a tip end of the back pressure lip, and
an outline of a corner portion of the end portion on the inner periphery side of the flange portion on the other side in the axis direction is a curved line in a cross section along the axis.

2. The valve stem seal according to claim 1, **characterized in that** the flange portion extends toward the axis obliquely to the one side in the axis direction.

3. The valve stem seal according to claim 1 or 2, **characterized in that** an end on an inner periphery side of the flange portion is positioned on an inner periphery side relative to the root of the back pressure lip.

4. The valve stem seal according to claim 1, **characterized in that** the back pressure lip extends toward the axis obliquely to the other side in the axis direction.
